# EUROPÄISCHE PATENTSCHRIFT

(11) **EP 2 408 656 B1**
(45) Veröffentlichungstag und Bekanntmachung des Hinweises auf die Patenterteilung: **24.08.2016**
(21) Anmeldenummer: 10709522.6
(22) Anmeldetag: 18.03.2010
(51) Int. Cl.: B62D 27/02, B62D 65/02, B05C 11/10, B05C 5/02, B05C 13/02, B64F 5/00, B64C 1/06

(54) **VERFAHREN UND VORRICHTUNG ZUM KLEBTECHNISCHEN FÜGEN GROSSFLÄCHIGER KOMPONENTEN IM FAHRZEUGBAU**
METHOD AND DEVICE FOR ADHESIVELY JOINING LARGE-SURFACE COMPONENTS IN VEHICLE CONSTRUCTION
PROCÉDÉ ET DISPOSITIF POUR ASSEMBLER DES COMPOSANTS À GRANDE SURFACE AU MOYEN D'UNE TECHNIQUE DE COLLAGE DANS LE DOMAINE DE LA CONSTRUCTION DE VÉHICULES

(30) Priorität: 19.03.2009 DE 102009013540; 08.03.2010 DE 102010010686
(43) Veröffentlichungstag der Anmeldung: 25.01.2012
(73) Patentinhaber: Airbus Operations GmbH, 21129 Hamburg (DE)
(72) Erfinder: NIERMANN, Dirk, 28865 Lilienthal (DE); FRAUEN, Holger, 21129 Hamburg (DE)
(74) Vertreter: Isarpatent
(86) Internationale Anmeldenummer: PCT/EP2010/053523
(87) Internationale Veröffentlichungsnummer: WO 2010/106129

(56) Entgegenhaltungen:
- WO-A1-2007/034197
- WO-A1-2007/037695
- WO-A1-2010/014333
- WO-A2-2004/076769
- DE-A1-102007 061 429
- US-A1- 2004 236 454

## Beschreibung

Die Erfindung betrifft eine Verfahren zum klebtechnischen Fügen großflächiger Komponenten im Fahrzeugbau, insbesondere im Bau von Flugzeugrümpfen für Großflugzeuge, gemäß dem Oberbegriff des Anspruchs 1 sowie eine entsprechende Vorrichtung gemäß dem Oberbegriff des Anspruchs 10.

Moderne Leichtbauweisen haben den Fahrzeugbau, ob dies nun Schiffe, Flugzeuge, Automobile oder Schienenfahrzeuge sind, in der jüngeren Vergangenheit stark verändert. So führt die Verwendung geeigneter Materialien zu Verbesserungen hinsichtlich Gewicht, Sicherheit und Komfort, wobei gleichzeitig Kosteneinsparungen möglich wurden. Neben der Verwendung geeigneter Materialien wurde dieser Fortschritt durch den intelligenten Einsatz moderner Klebstofftechnik erzielt, wobei die Klebstofftechnik sich mit den üblichen Fügetechniken wie Nieten, Schrauben oder Punktschweißen kombinieren lässt.

Mittlerweile hat die Klebstofftechnik auch beim Flugzeugbau Einzug gehalten. So wird das Rumpfwerk von Großflugzeugen in einer Schalenbauweise im wesentlichen manuell gefügt. In entsprechend großen Vorrichtungen wird der Rumpf eines Flugzeugs in teilmechanisierten und zum Teil in manuellen Montageschritten mit Stringern, Spanten, Passagier- und Ladeflur (Passenger- und Cargo-Floor), Tür- und Fracht-Türrahmen sowie Fensterrahmen ausgerüstet, bevor die Außenhaut geschlossen wird. Dabei kann der aus CFK, Leichtmetalllegierungen und/oder Glare ® bestehende Rumpf aus einem tonnenförmigen Segment oder aus Teilschalen bestehen.

Strukturrelevante Verbindungen werden durch Nieten oder durch eine Kombination aus Nieten und Kleben gefügt, was auch als Niet-Kleben bezeichnet wird. Dabei werden sowohl Paneel als auch Rumpfsegmente untereinander sowie die eingefügten Komponenten durch Nieten verbunden, wobei vor dem Fügen flüssige Shim-Materialen appliziert werden, die den beim Nieten verbleibenden, geringfügig ungleichmäßigen Spalt zwischen den Fügeteilen ausfüllen. Bei den Shim-Materialien handelt es sich in der Regel um 2-komponentige Epoxidharze, die ein Spaltfüllungsvermögen von ca. 2 - 3 mm und eine Aushärtzeit von 8 h bei Raumtemperatur besitzen.

Größere Spalte werden mittels Feststoff-Shims aus Faserverbundmaterial zeitaufwendig manuell ausgeglichen. Es kann auch eine Kombination aus flüssigen und festen Schim-Materialien eingesetzt werden. Insgesamt erfolgt die Verarbeitung der Shim-Materialien im wesentlichen manuell und erfordert eine hohen Zeitaufwand, insbesondere da die Fügepartner zur Bestimmung der Spaltmaße provisorisch gefügt werden und danach die Fügepartner für die Ausführung der weiteren Verfahrensschritte wieder auseinander gefahren werden müssen.

Ein Beispiel der Konstruktion von Großflugzeugen in Schalenbauweise kann der DE 10 2007 061 429 A1 entnommen werden, aus der eine Rumpfstruktur eines Flugzeugs bekannt ist. Dabei weist die Rumpfstruktur eine Außenhaut, mit der Außenhaut verbundene Strukturbauteile wie Stringer und Spanten sowie eine Innenverkleidung auf. Die Strukturbauteile werden mit der Außenhaut verklebt, vernietet und/oder verschweißt und die Innenverkleidung bildet mit der Außenhaut und ihren Strukturbauteilen eine tragende Verbindung. Dabei kann die Innenverkleidung ebenfalls mittels einer Klebeverbindung mit den Strukturbauteilen und/oder der Außenhaut verbunden sein.

Weiter ist aus der US 2004/236454 A1 bekannt, dass zwei miteinander zu verbindende Strukturbauteile, beispielsweise wenn eine Flugzeughaut an einem Stringer durch Kleben mittels eines Klebstoffs befestigt wird, es wichtig ist, dass die z verbindenden Flächen eben sind, um die Bildung von Lufteinschlüssen in der Vebindung zu vermeiden, da solche Lufteinschlüsse die mechanische Festigkeit der Verbindung schwächen. Infolgedessen muss eine Oberflächentopographie, welche nicht eben ist, vor dem Verbinden geglättet werden. Zu diesem Zweck werden die Oberflächenbereiche die miteinander verbunden werden optisch gescannt, um topographische Informationen bereitzustellen für jeden Oberflächenbereich der geglättet werden muss zum Bereitstellen einer ebenen Verbindungsfläche. Die topographischen Information wird verarbeitet, um die Konfiguration und das Volumen der Oberflächentopographie zu bestimmen, die mit einem Füllmaterial gefüllt werden muss, um eine ebene Fläche oder zumindest geglättete Fläche zu erzeugen. Das Füllmaterial ist dabei ein Pulver, eine Paste oder ein Klebestreifen.

Die bislang im Luftfahrtbereich eingesetzten Klebsysteme und Klebtechniken lassen ein schnelles automatisiertes klebtechnisches Fügen des Rumpfes sowie eingerüsteter Komponenten nicht zu. Ferner ist ein automatisierter Andruck der zu verklebenden Komponenten bei großen Fügeflächen schlecht beherrschbar, da sehr hohe Fügekräfte zum Verquetschen und Sicherstellen einer vollständigen Benetzung der Fügeflächen der Fügepartner notwendig wären.

Der Erfindung liegt daher die Aufgabe zugrunde, ein Verfahren und eine entsprechende Vorrichtung zum automatisierten klebtechnischen Fügen großflächiger Komponenten im Fahrzeugbau, insbesondere im Flugzeugbau, zu schaffen.

Diese Aufgabe wird durch ein Verfahren mit den Merkmalen des Anspruchs 1 sowie durch eine Vorrichtung mit den Merkmalen des Anspruchs 10 gelöst. Bevorzugte Ausführungsformen der Erfindung sind Gegenstand der Unteransprüche.

Das erfindungsgemäße Verfahren zum klebtechnischen Fügen von mindestens zwei großflächigen Fügepartnern im Fahrzeugbau, insbesondere im Flugzeugbau, wird durch die Merkmale des Anspruchs 1 definiert.

Vorzugsweise erfolgt das sequentielle Aufbringen des Fügedrucks in einem vorbestimmten Bereich, der sich entlang des Fügespalts korrespondierender Fügepartner verschiebt, wobei durch den Fügedruck in dem vorbestimmten Bereich die Fügepartner in die endgültige Fügeposition verbracht werden.

Weiter bevorzugt verschiebt sich die Position des vorbestimmten Bereichs, in dem der sequentielle Druck aufgebracht wird, stetig entlang des Fügespalts.

In einer weiteren bevorzugten Ausführungsform der Erfindung verschiebt sich die Position des vorbestimmten Bereichs, in dem der sequentielle Druck aufgebracht wird, stückweise entlang des Fügespalts. Mit anderen Worten, die Aufbringung des sequentiellen Drucks erfolgt unstetig mit einem vorgegebenen Takt.

Beim Flugzeugbau sind die Fügepartner wie Rumpfelemente bzw. Rumpfsegmente sowie die einzurüstenden Komponenten toleranzbehaftet. Durch moderne Einmeßverfahren lassen sich die Geometrien der Fügepartner ermitteln und aus den ermittelten digitalen Daten die Spaltmaße für klebtechnische Fügungen mit ausreichende Genauigkeit bestimmen. Die Applizierung des Klebstoffs in den Fügespalt nach oder während des Fügens der Fügepartner ermöglicht ein automatisiertes Fügen der Fügepartner. Da ferner ein provisorisches Fügen der Fügepartner zur Bestimmung der Spaltmaße unterbleibt, ist eine hohe Fertigungskadenz möglich.

Vorzugsweise wird anhand der Fügespaltmaße die Menge des zu applizierenden Klebstoffs bestimmt. Dadurch wird sichergestellt, dass die Klebverbindung den gewünschten Stabilitätsbedingungen genügt und ein ökonomischer Klebstoffverbrauch erzielt wird.

Die Applizierung des Klebstoffs kann in einen Bereich des Fügespaltes erfolgen, der unmittelbar vor dem mit sequentiellem Druck zu fügenden vorbestimmten Bereich des Fügespaltes liegt.

Das dafür notwendige Fließen des Klebstoffs kann durch seine Formulierung, Schwerkraft, Fliehkräfte, magnetische und/oder elektrische Felder, Unterdruck in der Fuge, Temperaturführung der Fügepartner und/oder des Klebstoffs oder einer Kombination der genannten Parameter erreicht werden.

Weiter bevorzugt kann der Fügespalt seitliche oder flächenrandständige Begrenzungselemente aufweisen, um ein Austreten des in den Fügestalt applizierten Klebstoffs zu verhindern. Dadurch wird ein unkontrollierter Klebstoffaustritt aus dem Klebspalt vermieden werden. Diese Begrenzungselemente können nach der Aushärtung an der Klebung verbleiben oder nach Erreichen einer ausreichenden mechanischen Stabilität der Klebung entfernt werden. Für den Fall, dass die Elemente verbleiben, können sie auch aus einem zweiten Klebstoff bestehen. Dieser zweite Klebstoff kann zu einem Zeitpunkt vor, während oder nach dem Einbringen der Fügepartner in die endgültige Fügeposition auf eine oder beide Fügeteiloberflächen appliziert werden. Dieser zweite Klebstoff kann separat oder mit dem in den Fügespalt applizierten Klebstoff zusammen ausgehärtet werden. Für den Fall, dass die Begrenzungselemente entfernt werden, können sie eine haftungsabweisende Oberfläche aufweisen, die beispielsweise durch das verwendete Material oder eine auflaminierte Folie erzielt werden kann.

Vorzugsweise werden vor dem Zusammenfügen der Fügepartner die Fügeflächen der Fügespalte bzw. Fugen einer automatisierten Vorbehandlung zur Optimierung der klebtechnischen Qualität unterzogen und deren klebtechnische Qualität bestimmt. Damit wird eine optimales Klebeergebnis erzielt.

Insbesondere werden beim Flugzeugbau die Fügepartner durch Rumpfsegmente und strukturell relevante Komponenten wie Spanten, Stringer etc. zum Erstellen einer Rumpfstruktur gebildet.

Die erfindungsgemäße Vorrichtung zur Durchführung des oben erläuterten Verfahrens wird durch die Merkmale des Anspruchs 10 definiert.

Vorzugsweise kann das Druckwerkzeug den Fügedruck einseitig oder beidseitig sequentiell auf den Fügespalt aufbringen.

Weiter bevorzugt weist die Vorrichtung weitere Werkzeuge zur Oberflächenbehandlung und/oder zum Oberflächenmonitoring und/oder zum Klebstoffaushärten auf. Dabei können einzelne Werkzeuge zur Bearbeitung der einzurüstenden Komponenten dienen, währendweitere Werkzeuge zur Aufnahme auf den Zentralträger ausgelegt sind, um den ersten auf dem Bauteilträger angeordneten Fügepartner bearbeiten und/oder ausmessen zu können. Diese Werkzeuge können als Roboter ausgelegt sein, die bedarfsabhängig über entsprechende räumliche Freiheitsgrade verfügen.

Eine bevorzugte Ausführungsform der Erfindung wird nachfolgend anhand der Zeichnungen beschrieben. Dabei zeigt
- Fig. 1: eine erste perspektivische Darstellung der erfindungsgemäßen Vorrichtung mit einem über einen Zentralträger geführten Werkzeug zum Einrüsten von Spanten,
- Fig. 2: eine zweite perspektivische Darstellung der Vorrichtung mit einem weiteren Werkzeug,
- Fig. 3: eine Darstellung eines Details der Vorrichtung nach Fig. 1,
- Fig. 4: zeigt das stetige sequentielle Aufbringen eines Fügedrucks in schematischer Darstellung, und
- Fig. 5: zeigt das stückweise sequentielle Aufbringen eines Fügedrucks in schematischer Darstellung.

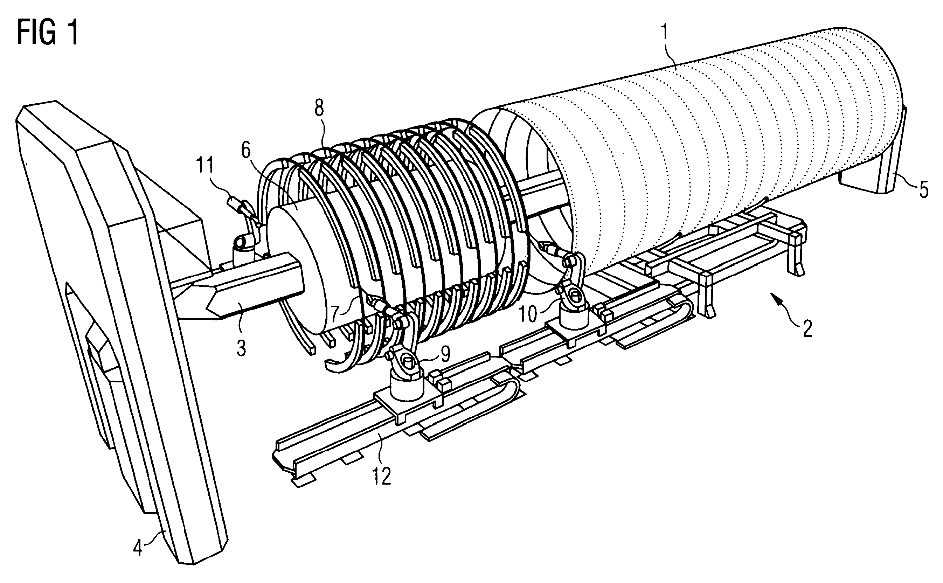

Fig. 1 zeigt eine schematische Darstellung der erfindungsgemäßen Vorrichtung für die Strukturkomplettierung von Rumpfsegmenten basierend auf dem Zentralträgerprinzip, wobei die Vorrichtung Techniken und Systeme für eine weitgehend parallelisierte Einrüstung von Spanten, Passagier- und Cargo-Fluren, Tür- und Frachttürrahmen sowie Fensterrahmen in das eingerüstete Rumpfsegment bereithält. Ein Rumpfsegment 1 ist auf einem fahrbaren Bauteileträger 2 gelagert, wobei der Bauteileträger 2 eine automatisierte Bauteileaufnahme und Systeme zur Form- und Lagekorrektur (nicht dargestellt) aufweist. Im Innern des Rumpfsegments 1 erstreckt sich im eingerüsteten Zustand des Rumpfsegments 1 ein Zentralträger 3, der beidseitig von festen und versenkbaren Auflagern 4, 5 gestützt wird.

Auf dem von den festen und versenkbaren Auflagern 4, 5 gestützten Zentralträger 3, der beispielsweise eine Länge von ca. 22 m haben kann, können je nach Einrüstvorgang verschiedene Integrationswerkzeuge 6 geführt werden. Zum Einbringen des in Fig. 1 dargestellten tonnenförmigen Rumpfsegments 1 in die Vorrichtung kann der Zentralträger 3 teleskopartig eingefahren werden. Das Rumpfsegment 1 wird auf dem fahrbaren Bauteilträger 2 liegend in die Vorrichtung eingebracht. Der Bauteilträger 2 besitzt eine Funktionalität zur Lagekorrektur des Rumpfsegments 1 sowie Spannvorrichtungen, mit denen eine Formfixierung und ggf. eine Formkorrektur des Rumpfsegments 1 vorgenommen werden kann. Nach dem Einbringen des Rumpfsegments 1 kann der Zentralträger 3 wieder zum hinteren Auflager 5 ausgefahren werden. Dann wird das jeweils benötigte und außerhalb der Anlage bereits vorgerüstete Integrationswerkzeug 6 aufgesetzt, welches im Beispiel mit einzurüstenden Spanten 7 bestückt ist.

Um eine hochgradige Parallelisierung von Montageschritten zu erreichen, sollen möglichst viele der oben genannten Komponenten pro Prozessschritt und pro Werkzeug gleichzeitig eingerüstet werden.

Über den Zentralträger 3 als Führung wird das mit den einzubringenden Komponenten aufgerüstete Integrationswerkzeug 6 in das Rumpfsegment1 eingefahren und referenziert sich optisch im Raum, so dass später die Spantgurtoberfläche 8 den Referenz-Nullpunkt darstellt.

Danach werden die einzurüstenden Komponenten, hier die Spanten 7, durch Klapp-, Setz- oder radial gerichtete Spreizprozesse des Integrationswerkzeugs 6 simultan in ihre exakten Fügepositionen gebracht. Eine mögliche Kombination liegt z.B. in dem gleichzeitigen Einbringen von Spanten 7 und Fußböden (nicht dargestellt).

Ferner weist die Vorrichtung modulare Werkzeuge 9,10, 11 sogenannte Endeffektoren, auf, die beweglich auf einem Schienensystem 12 angeordnet sind, und die zur Oberflächenbehandlung, Oberflächenmonitoring, Klebstoffauftrag und Aushärten des Klebstoffs dienen und für diese Aufgaben mit den entsprechenden Werkzeugen bestückt werden könne, wobei die entsprechende Bestückung automatisch erfolgt.

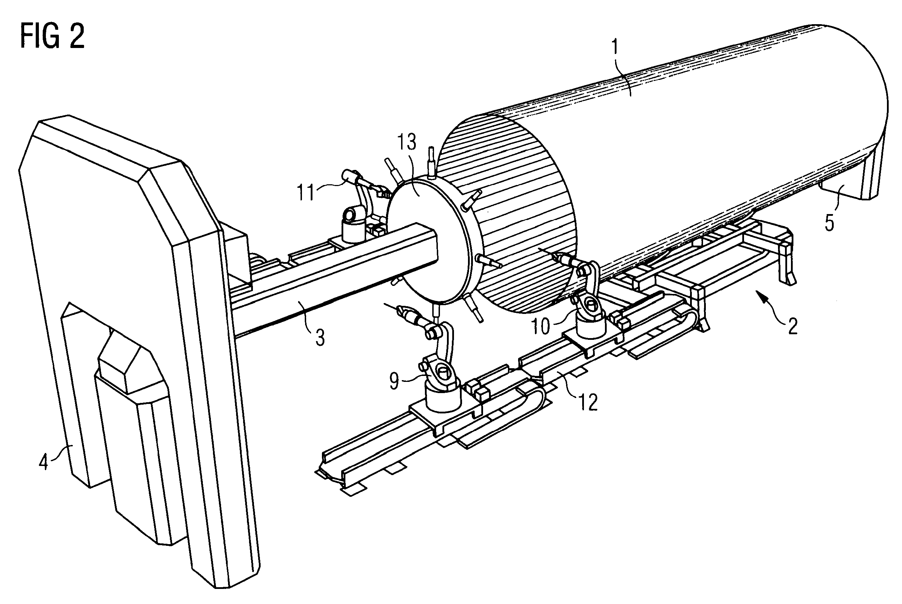

Fig. 2 zeigt die Vorrichtung der Fig. 1, wobei auf dem Zentralträger 3 ein modulares Werkzeug 13 angeordnet ist, welches dazu dient die Fügeflächen im Rumpfsegment 1 zur Erzielung eines optimalen Klebergebnisses automatisch zu behandeln. Weiterhin dient das modulare Werkzeug 13 dazu, die vorbehandelten Fügeflächen hinsichtlich ihrer klebtechnischen Qualität zu beurteilen. Zur Vorbehandlung der Fügeflächen und deren Beurteilung wird das modulare Werkzeug 13 in das Rumpfsegment 1 eingefahren

Wie bereits erläutert, basiert der fügetechnische Ansatz auf dem Einsatz der Klebtechnik, ohne dass zusätzliche Nieten zum Fixieren verwendet werden. Sollten Nieten an ausgesuchten Stellen notwendig sein, so werden diese später auf einer anderen Anlage eingebracht. Die Funktion des Klebens in der Montage ist damit die schnelle Fixierung der eingebrachten Komponenten sowie der Toleranzausgleich zur inneren Oberfläche des Rumpfes, die je nach Herstellungstechnik unterschiedlich stark toleranzbehaftet sein kann.

Neben dem Erfüllen einer Ausgleichs- und Abdicht-Funktion gehören zu den wesentlichen Forderungen an einen CFK-Strukturklebstoff für Luftfahrtanwendungen eine gute Verarbeitbarkeit, die vor allem durch lange offene Zeiten und montagegerechte Rheologie definiert wird, eine schnelle Aushärtung sowie eine hohe Druckbeständigkeit, um in der ausgehärteten Fuge Lockerungen durch Fließprozesse zu vermeiden.

Zunächst werden daher die Fügeflächen im Rumpf, hier durch das Werkzeug 13, und auf den Komponenten wie den beispielhaften Spanten automatisch vorbehandelt und anschließend mit einem automatisierten Monitoring-Verfahren hinsichtlich ihrer klebtechnischen Qualität geprüft. Dadurch wird eine deutliche Verringerung der benötigten Vorbehandlungszeit bei wesentlich verbesserter Reproduzierbarkeit im Vergleich zur manuellen Durchführung erreicht.

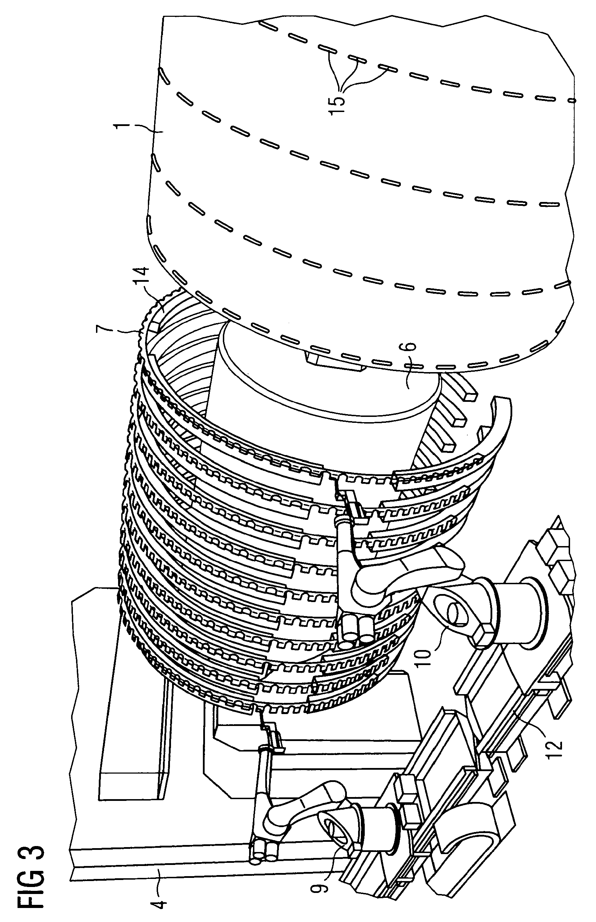

Fig. 3 zeigt den Vorgang der vorbereitenden Oberflächenbehandlung der Spanten 7 mittels der modularen Werkzeuge 9 und 10. Die Spanten 7 sind dabei auf schematisch dargestellten Aufnehmern 14 angeordnet. Nach der vorbereitenden Oberflächenbehandlung wird das Integrationswerkzeug 6 mit den eingerüsteten Spanten in die Rumpfstruktur 1 eingebracht und die Spanten 7 werden mittels der Aufnehmer14 des Integrationswerkzeugs 6 automatisch in die Fügeposition gebracht. Anschließend wird der Klebstoff durch in der Rumpfstruktur angeordnete Applikationsöffnungen 15 in die jeweiligen Fügespalte eingebracht.

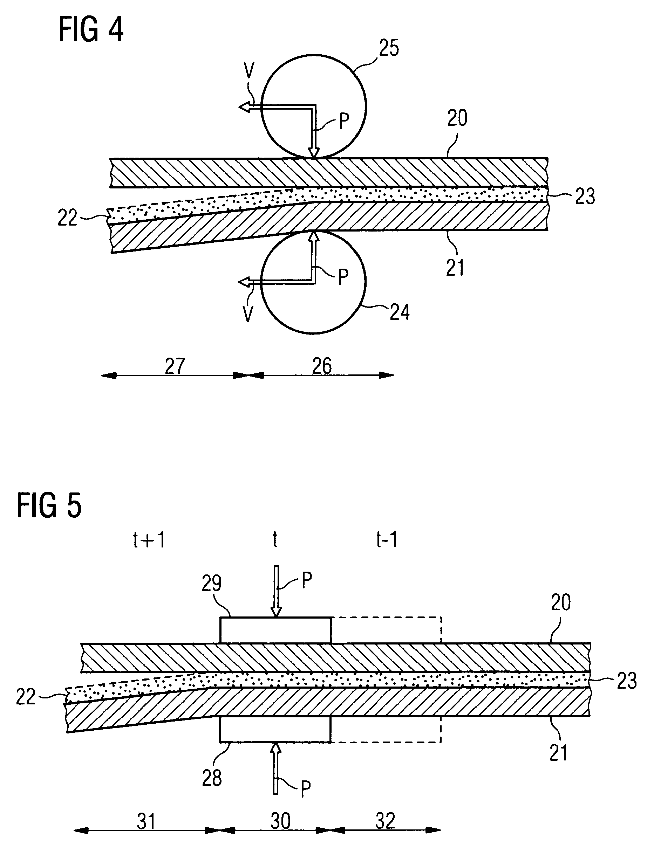

Fig. 4 zeigt in schematischer Querschnittsdarstellung den Vorgang des stetigen Fügens mit sequentieller Druckbeaufschlagung. Dargestellt ist ein erster, äußerer Fügepartner 20 und ein zweiter. innerer Fügepartner 21. Der äußere Fügepartner 20 kann beispielsweise ein Rumpfsegment sein, in welches als innerer Fügepartner 21 ein Spant eingefügt werden soll. Die beiden Fügepartner werden durch entsprechende Werkzeuge der Vorrichtung, also dem in den vorherigen Figuren beschriebenen Bauteileträger 1 und das Integrationswerkzeug 6, d.h. seinen Aufnehmern 14, in eine vorläufige Fügeposition (nicht dargestellt) gebracht. Nach einer vorbereitenden Behandlung und Inspektion der Fügeflächen wird der notwenige Klebstoff 22 aufgebracht. In Fig. 4 wird der Klebstoff 22 nur auf dem inneren Fügepartner 21 aufgebracht, was aber nicht zwingend ist. Der Klebstoff 22 kann auf beiden Fügepartnern 20, 21 oder nur auf einem aufgebracht sein, je nach Anwendung. Dargestellt sind ein inneres Druckwerkzeug 24 und ein äußeres Druckwerkzeug 25, die innerhalb eines Fügebereichs 26 einen vorgegebenen Druck P auf den äußeren 20 und inneren Fügepartner 21 ausüben, was dazu führt, dass ein Fügespalt 23 vorgegebener Dicke entsteht. Äußeres und Inneres Druckwerkzeug 20, 21 bewegen sich mit einer vorgegeben Geschwindigkeit V entlang des Fügespaltes 23, so dass eine stetiges sequentielles Fügen der Fügepartner 20, 21 bewirkt wird. Das Einbringen des Klebstoffs 22 kann in einem Bereich 27 unmittelbar vor dem aktuellen Fügebereich 26 bewirkt werden.

Das innere Druckwerkzeug kann ein Bestandteil der Aufnahmen 14 des Integrationswerkzeugs 6 sein, während das äußere Druckwerkzeug 25 ein einwechselbares Werkzeug der als Roboter ausgelegten modularen Werkzeuge 9, 10, 11 sein kann. Dadurch, dass der Druck sequentiell und damit lokal aufgebracht wird, kann lokal der benötigte hohe Druck bereit gestellt werden und muss nicht über den gesamten Fügespalt gleichzeitig zur Verfügung gestellt werden, was technisch bei den Großbauteilen kaum sinnvoll ist.

Fig. 5 zeigt in schematischer Querschnittsdarstellung den Vorgang des abschnittsweisen oder stückweisen, also nicht stetigen Fügens mit sequentieller Druckbeaufschlagung. Ein äußerer Fügepartner 20 und ein innerer Fügepartner werden mittels eines Klebstoffs 22 zusammengefügt, so dass ein Fügespalt 23 vorgegebener Dicke entsteht. Die sequentielle Druckbeaufschlagung zur Fügung der Fügepartner erfolgt hier mit einem inneren und äußeren Druckwerkzeug 28, 29 getaktet. Mit andern Worten, zu einem Zeitpunkt t wird auf die Fügepartner im aktuellen Fügebereich 30 ein Druck P ausgeübt und die Fügepartner 20, 21 in die endgültige Fügeposition gebracht. Gestrichelt dargestellt sind die Druckwerkzeuge zum vorherigen Zeitpunkt t-1, wo sie im vorherigen Fügebereich 32 die Fügung der Fügepartner 20, 21 bewirkten. Zum nächsten Zeitpunkt t+1 werden die Druckwerkzeuge entlang des Fügespaltes 23 in den nächsten Fügebereich 31 verbracht und werden dann dort die Fügepartner 20, 21 fügen. Mit anderen Worten, die Druckwerkzeuge werden von den aktuellen Druckbereich 30 beidseitig abgehoben, in den nächsten Fügebereich 31 verbracht, wo die nächste Fügung mittels Druckbeaufschlagung durchgeführt wird.

Zum aktuellen Zeitpunkt t kann der nächste Fügebereich 31 als Bereich dienen, in dem der Klebstoff 22 eingebracht wird. Dies ist jedoch nicht zwingend, sondern der Klebstoff 22 kann wie in der Beschreibung der Fig. 4 auch zu einem Zeitpunkt vor dem Einbringen der Spanten 7 in das Rumpfsegment 1 aufgebracht werden.

Es ist bei den beschriebenen beispielhaften Verfahren zur sequentiellen Druckbeaufschlagung möglich, dass die Druckbeaufschlagung nur von einer Seite aus erfolgt. Weist beispielsweise der äußere Fügepartner 20 eine ausreichende Festigkeit auf, so kann die Druckbeaufschlagung nur mittels eines inneren Druckwerkzeugs sowohl stetig als auch abschnittsweise erfolgen.

### BEZUGSZEICHENLISTE

- 1: Rumpfsegment
- 2: Bauteileträger
- 3: Zentralträger
- 4: vorderer Auflager
- 5: hinterer Auflager
- 6: Integrationswerkzeug
- 7: Spanten
- 8: Spantgurtoberfläche
- 9: modulares Werkzeug
- 10: modulares Werkzeug
- 11: modulares Werkzeug
- 12: Schienensystem
- 13: modulares Werkzeug
- 14: Aufnehmer
- 15: Applikationsöffnung

- 20: erster Fügepartner
- 21: zweiter Fügepartner
- 22: Klebstoff
- 23: Fügespalt
- 24: inneres Druckwerkzeug
- 25: äußeres Druckwerkzeug
- 26: Fügebereich
- 27: Bereich vor dem Fügebereich
- 28: inneres Druckwerkzeug
- 29: äußeres Druckwerkzeug
- 30: Fügebereich
- 31: nächster Fügebereich
- 32: vorheriger Fügebereich
- P: Druck
- V: Geschwindigkeit entlang des Fügespalts
- t: Zeit

## Patentansprüche

1. Verfahren zum klebtechnischen Fügen von mindestens zwei großflächigen Fügepartnern (1, 7; 20, 21) im Fahrzeugbau, insbesondere im Flugzeugbau, **gekennzeichnet durch** die Schritte:
Automatisiertes Ermitteln der Geometriedaten der Fügepartner (1, 7; 20, 21),
Ermitteln der Fügespaltmaße der Fügepartner (1, 7; 20, 21) aus den Geometriedaten,
Fügen der Fügepartner (1, 7; 20, 21) in eine Fügeposition,
Fügespaltmaßabhängiger Klebstoffauftrag auf eine oder beide Fügeflächen der zwei zu fügenden Fügepartner(1, 7; 20, 21), wobei ein Fügepartner (1, 20) Applikationsöffnungen (15) aufweist zum anschließend Einbringen eines fließfähigen Klebstoffs (22) **durch** die Applikationsöffnungen (15) in einen jeweiligen Fügespalt, und Sequentielles Aufbringen von Fügedruck (P) auf die Fügeflächen entlang des Fügespalts (23) zum Verbringen der Fügepartner (1, 7; 20, 21) in die endgültige Fügeposition.

2. Verfahren nach Anspruch 1, **dadurch gekennzeichnet, dass** das sequentielle Aufbringen des Fügedrucks (P) in einem vorbestimmten Bereich (26, 30) erfolgt, der sich entlang des Fügespalts(23) korrespondierender Fügepartner (20, 21) verschiebt, wobei durch den Fügedruck (P) in dem vorbestimmten Bereich (26, 30) die Fügepartner (1, 7; 20, 21) in die endgültige Fügeposition verbracht werden.

3. Verfahren nach Anspruch 2, **dadurch gekennzeichnet, dass** die Position des vorbestimmten Bereichs (26), in dem der sequentielle Druck (P) aufgebracht wird, sich stetig entlang des Fügespalts (23) verschiebt.

4. Verfahren nach Anspruch 2, **dadurch gekennzeichnet, dass** die Position des vorbestimmten Bereichs (30), in dem der sequentielle Druck (P) aufgebracht wird, sich stückweise entlang des Fügespalts (23) verschiebt.

5. Verfahren nach einem der vorangegangenen Ansprüche, **dadurch gekennzeichnet, dass** anhand der Fügespaltmaße die Menge des zu applizierenden Klebstoffs (22) bestimmt wird.

6. Verfahren nach einem der vorangegangenen Ansprüche, **dadurch gekennzeichnet, dass** die Applizierung des Klebstoffs (22) in einen Bereich (27, 31) des Fügespaltes (23) erfolgt, der unmittelbar vor dem mit sequentiellem Druck zu fügenden vorbestimmten Bereich (26, 30) des Fügespaltes (23) liegt.

7. Verfahren nach einem der vorangegangenen Ansprüche, **dadurch gekennzeichnet, dass** der Fügespalt (23) seitliche oder flächenrandständige Begrenzungselemente aufweist, um ein Austreten des in den Fügespalt (23) applizierten Klebstoffs (22) zu verhindern.

8. Verfahren nach einem der vorangegangenen Ansprüche, **dadurch gekennzeichnet, dass** vor dem Zusammenfügen der Fügepartner (1, 7; 20, 21) die Fügeflächen der Fügespalte (23) einer automatisierten Vorbehandlung zur Optimierung der klebtechnischen Qualität unterzogen und deren klebtechnische Qualität bestimmt werden.

9. Verfahren nach einem der vorangegangenen Ansprüche, **dadurch gekennzeichnet, dass** die Fügepartner (1, 7; 20, 21) durch Rumpfsegmente (1) und strukturell relevante Komponenten (7) zum Erstellen einer Rumpfstruktur gebildet werden.

10. Vorrichtung zur Durchführung des Verfahrens nach einem der vorangegangenen Ansprüche aufweisend:
einen Bauteilträger (2) mit Bauteilaufnahme zur Aufnahme eines ersten Fügepartners,
einen Zentralträger (3) zur Aufnahme eines Integrationswerkzeug (6),
ein Integrationswerkzeug (6) zur Aufnahme und zum Einbringen der in den ersten Fügepartner einzubringenden weiteren Fügepartner, wobei einer der Fügepartner (1, 20) Applikationsöffnungen (15) aufweist zum Einbringen eines fließfähigen Klebstoffs (22) durch die Applikationsöffnungen (15),
ein Meßsystem zum Ermitteln der Geometriedaten der Fügepartner und zum Berechnen der Fügespalte,
mindestens ein modulares Werkzeug (9, 10) zum Applizieren des fließfähigen Klebstoffs durch die Applikationsöffnungen (15) in einen jeweiligen Fügespalt, mindestens ein Druckwerkzeug (24, 25; 28, 29) zum sequentiellen Aufbringen des Fügedrucks (P) entlang des zu verklebenden Fügespaltes (23), und
ein Steuersystem zum Steuern der Vorrichtung.

11. Vorrichtung nach Anspruch 10, **dadurch gekennzeichnet, dass** das Druckwerkzeug (24, 25; 28, 29) den Fügedruck (P) einseitig oder beidseitig sequentiell auf den Fügespalt (23) aufbringt.

12. Vorrichtung nach Anspruch 10 oder 11, **dadurch gekennzeichnet, dass** die Vorrichtung weitere modulare Werkzeuge (13) zur Oberflächenbehandlung und/oder Oberflächenmonitoring und/oder Klebstoffaushärten aufweist.

## Claims

1. Method for the adhesive joining of at least two large surface area joining partners (1,7; 20,21) in the vehicle construction industry, in particular in the aviation construction industry, **characterised by** the steps:
determining the geometric data of the joining partners, (1,7; 20,21) in an automated manner,
determining the dimension of the join gap between the joining partners (1,7; 20,21) from the geometric data,
joining the joining partners (1, 7; 20, 21) in a joining position,
applying a quantity of adhesive that depends upon the dimension of the join gap to one or both joining surfaces of the two joining partners (1,7; 20,21) that are to be joined, wherein one joining partner (1,20) comprises application apertures (15) so as to subsequently introduce a free-flowing adhesive (22) through the application apertures (15) into a respective join gap,
and
applying the joining pressure (P) in a sequential manner onto the joining surfaces along the join gap (23) so as to bring the joining partners (1,7; 20,21) into the final joining position.

2. Method according to Claim 1, **characterised in that** the joining pressure (P) is applied in a sequential manner in a predetermined area (26,30), which displaces along the join gap (23) between the corresponding joining partners (20,21), wherein the joining partners (1,7; 20,21) are brought into the final joining position by means of the joining pressure (P) in the predetermined area (26,30).

3. Method according to Claim 2, **characterised in that** the position of the predetermined area (26) in which the sequential pressure (P) is applied displaces continuously along the join gap (23).

4. Method according to Claim 2, **characterised in that** the position of the predetermined area (30) in which the sequential pressure (P) is applied displaces step-by-step along the join gap (23).

5. Method according to any one of the preceding claims, **characterised in that** the quantity of the adhesive (22) that is to be applied is determined with reference to the dimensions of the join gap.

6. Method according to any one of the preceding claims, **characterised in that** the adhesive (22) is applied in the area (27,31) of the join gap (23), which lies directly upstream of the area (26,30) of the join gap (23) that is predetermined for joining by means of applying pressure in a sequential manner.

7. Method according to any one of the preceding claims, **characterised in that** the join gap (23) comprises lateral delimiting elements or delimiting elements that are arranged on the surface edge in order to prevent a leakage of the adhesive (22) that is applied into join gap.

8. Method according to any one of the preceding claims, **characterised in that** prior to joining the joining partners (1,7; 20,21) the joining surfaces of the join gap (23) are subjected to an automated pre-treatment so as to optimize the quality of the joining surfaces with regard to receiving an adhesive, and the quality of said joining surfaces with regard to receiving an adhesive is determined.

9. Method according to any one of the preceding claims, **characterised in that** the joining partners (1,7; 20,21) are formed by means of body segments (1) and structurally relevant components (7) so as to create a body structure.

10. Device for implementing the method according to any one of the preceding claims comprising:
a component carrier (2) having a component receiving device for receiving a first joining partner,
a central carrier (3) for receiving an integrating tool (6),
an integrating tool (6) for receiving and inserting the further joining partners that are to be inserted in the first joining partner, wherein one of the joining partners (1,20) comprises application apertures (15) for introducing a free-flowing adhesive (22) through the application apertures (15),
a measuring system for determining the geometric data of the joining partners and for calculating the dimensions of the join gap,
at least one modular tool (9, 10) for applying the free-flowing adhesive through the application aperture (15) into a respective join gap,
at least one pressure tool (24,25; 28,29) for applying the joining pressure (P) in a sequential manner along the join gap (23) that is to receive the adhesive, and a control system for controlling the device.

11. Device according to Claim 10, **characterized in that** the pressure tool (24,25; 28,29) applies the joining pressure (P) on one side or on both sides of the join gap (23) in a sequential manner.

12. Device according to Claim 10 or 11, **characterized in that** the device comprises further modular tools (13) for providing surface treatment, and/or for monitoring the surface and/or for curing the adhesive.

## Revendications

1. Procédé pour assembler au moins deux pièces à assembler à grande surface (1, 7 ; 20, 21) au moyen d'une technique de collage dans le domaine de la construction de véhicules, notamment de la construction d'aéronefs, **caractérisé par** les étapes consistant à :
déterminer automatiquement les caractéristiques géométriques des pièces à assembler (1, 7 ; 20, 21),
déterminer les dimensions de la fente d'assemblage des pièces à assembler (1, 7 ; 20, 21) à partir des caractéristiques géométriques,
assembler les pièces à assembler (1, 7 ; 20, 21) dans une position d'assemblage,
appliquer une colle en fonction des dimensions de la fente d'assemblage sur une ou les deux surfaces d'assemblage des deux pièces à assembler (1, 7 ; 20, 21),
une pièce à assembler (1, 20) présentant des orifices d'application (15) destinés à y introduire ensuite une colle à écoulement libre (22) dans une fente d'assemblage respective par les orifices d'application (15), et
appliquer de manière séquentielle une pression d'assemblage (P) sur les surfaces d'assemblage le long de la fente d'assemblage (23) pour amener les pièces à assembler (1, 7 ; 20, 21) dans la position d'assemblage définitive.

2. Procédé selon la revendication 1, **caractérisé en ce que** l'application séquentielle de la pression d'assemblage (P) se fait dans une zone prédéfinie (26, 30), qui se déplace le long de la fente d'assemblage (23) de pièces à assembler (20, 21) correspondantes, la pression d'assemblage (P) dans la zone prédéfinie (26, 30) permettant d'amener les pièces à assembler (1, 7 ; 20, 21) dans la position d'assemblage définitive.

3. Procédé selon la revendication 2, **caractérisé en ce que** la position de la zone prédéfinie (26), dans laquelle la pression séquentielle (P) est appliquée, se déplace en continu le long de la fente d'assemblage (23).

4. Procédé selon la revendication 2, **caractérisé en ce que** la position de la zone prédéfinie (30), dans laquelle la pression séquentielle (P) est appliquée, se déplace de manière segmentée le long de la fente d'assemblage (23).

5. Procédé selon l'une des revendications précédentes, **caractérisé en ce que** la quantité de la colle (22) à appliquer est déterminée à l'aide des dimensions de la fente d'assemblage.

6. Procédé selon l'une des revendications précédentes, **caractérisé en ce que** l'application de la colle (22) se fait dans une zone (27, 31) de la fente d'assemblage (23), qui se trouve directement avant la zone prédéfinie (26, 30) de la fente d'assemblage (23) à assembler au moyen de la pression séquentielle.

7. Procédé selon l'une des revendications précédentes, **caractérisé en ce que** la fente d'assemblage (23) présente des éléments de limitation latéraux ou se trouvant au bord de la surface, pour empêcher le débordement de la colle (22) appliquée dans la fente d'assemblage (23).

8. Procédé selon l'une des revendications précédentes, **caractérisé en ce que**, avant l'assemblage des pièces à assembler (1, 7 ; 20, 21) les surfaces d'assemblage des fentes d'assemblage (23) sont soumises à un prétraitement automatique afin d'optimiser la qualité en matière de collage et leur qualité en matière de collage est déterminée.

9. Procédé selon l'une des revendications précédentes, **caractérisé en ce que** les pièces à assembler (1, 7 ; 20, 21) sont formées par des segments de fuselage (1) et des composants relatifs à la structure (7) destinés à constituer une structure de fuselage.

10. Dispositif destiné à exécuter le procédé selon l'une des revendications précédentes, comportant :
un support de composant (2) doté d'un logement de composant destiné à recevoir une première pièce à assembler,
un support central (3) destiné à recevoir un outil d'intégration (6),
un outil d'intégration (6) destiné à recevoir et
introduire l'autre pièce à assembler à introduire dans la première pièce à assembler, l'une des pièces à assembler (1, 20) présentant des orifices d'application (15) destinés à introduire une colle à écoulement libre (22) par les orifices d'application (15),
un système de mesure destiné à déterminer les caractéristiques géométriques des pièces à assembler et à calculer les fentes d'assemblage,
au moins un outil modulaire (9, 10) destiné à appliquer la colle à écoulement libre dans une fente d'assemblage respective par les orifices d'application (15),
au moins un outil de pression (24, 25 ; 28, 29) destiné à appliquer de manière séquentielle la pression d'assemblage (P) le long de la fente d'assemblage (23) à coller, et
un système de commande destiné à commander le dispositif.

11. Dispositif selon la revendication 10, **caractérisé en ce que** l'outil de pression (24, 25 ; 28, 29) applique la pression d'assemblage (P) sur la fente d'assemblage (23) de manière séquentielle sur un côté ou sur les deux côtés.

12. Dispositif selon la revendication 10 ou 11, **caractérisé en ce que** le dispositif comporte d'autres outils modulaires (13) pour le traitement de surface et/ou le contrôle de surface et/ou le durcissement de la colle.
